# EUROPÄISCHE PATENTSCHRIFT

(11) **EP 2 870 850 B1**
(45) Veröffentlichungstag und Bekanntmachung des Hinweises auf die Patenterteilung: **22.03.2017**
(21) Anmeldenummer: 14401107.9
(22) Anmeldetag: 31.10.2014
(51) Int. Cl.: A01C 21/00, A01C 7/10

(54) **Anzeige- und Steuersystem für das An- und Abschalten eines Dosierorgans**
Control and display system for connection and disconnection of a metering device
Système de commande et d'affichage pour l'allumage et l'arrêt d'un organe de dosage

(30) Priorität: 08.11.2013 DE 102013112307
(43) Veröffentlichungstag der Anmeldung: 13.05.2015
(73) Patentinhaber: Amazonen-Werke H. Dreyer GmbH & Co. KG, 49205 Hasbergen (DE)
(72) Erfinder: Bardroff, Alexander, 26127 Oldenburg (DE); Grosenik, Rainer, 27777 Bergedorf (DE); von Minden, Thomas, 27798 Hude (DE)

(56) Entgegenhaltungen:
- EP-A1- 2 636 292
- WO-A1-98/42178
- WO-A1-2011/053286
- WO-A1-2012/115563

## Beschreibung

Die Erfindung betrifft ein Anzeige- und Steuersystem mit einer Anzeigevorrichtung für das An- und/oder Abschalten zumindest eines Dosierorgans.

Ein derartiges Anzeige- und Steuersystem mit einer Anzeigevorrichtung für das An- und/oder Abschalten zumindest eines Dosierorgans ist in der Praxis bekannt. Dieses Dosierorgan ist einer Verteilmaschine mit einem Vorratsbehälter, in dessen unteren Bereich zumindest ein das sich im Vorratsbehälter befindliche auszubringende Material in einstellbaren Mengen in zumindest eine zu einem eine Auslassöffnung aufweisenden Ausbringorgan führende Leitung einspeisendes von einem Antriebselement betätigbares Dosiergan angeordnet ist, zugeordnet.

Es besteht das Problem langer Verzögerungszeiten bei Verteilmaschinen, wie beispielweise Sämaschinen, Düngerstreuer mit Schwerkraft- oder pneumatischer Materialförderung von dem Dosierorgan zu dem zugeordneten Ausbringorgan, wie beispielsweise Säscharen, Ausblasöffnungen, etc..

Weiterhin besteht das Problem besteht darin, dass die Förderzeit des Saatgutes in der pneumatischen Maschine von vielen Faktoren abhängig ist, wie spezifisches Gewicht, Größe, Luftgeschwindigkeit (Gebläsedrehzahl), Schlauchverlegung, Beize, etc..

Dieses Problem ist bisher nicht zufriedenstellend gelöst.

Durch die EP 2 636 292 A1 ist eine Einzelkornsämaschine zur Ablage von Saatgut in Säfurchen bekannt. Die Saatkörner in den einzelnen Säfurchen sollen sowohl ortsspezifisch wie auch in ganz bestimmter Weise zueinander und in gleichmäßigen Abständen zueinander, nämlich in einem so genannten Quadrat- oder Rechteckverband abgelegt werden. Hierzu wird das jeweilige Dosierorgan entsprechend über eine mit einem GPS-Sender verbundene Steuereinrichtung ein- oder abgeschaltet.

Des Weiteren ist durch die WO 98/42178 A1 eine Sämaschine für die getrennte Ausbringung verschiedener Materialien und Materialraten auf einem Feld bekannt. Es soll so durch die entsprechende Ansteuerung des Dosierorgans eine Vermischung zwischen den verschiedenen Materialien und Materialraten vermieden werden. Der dort verwendete Sensor ermittelt und überwacht den Füllstand.

Der Erfindung liegt die Aufgabe zugrunde, durch eine verbesserte Überwachung die Dosierorgane so rechtzeitig an-und/oder abzuschalten, dass die Verzögerungszeiten durch die Förderung in den Leitungen von dem Dosierorgan zu den Ausbringorganen eliminiert wird, damit das Material in optimierter Weise auf dem Feld ohne wesentliche Fehlstellen oder Mehrfachüberlappungen ausgebracht wird.

Diese Aufgabe wird erfindungsgemäß durch die Merkmale der Patentansprüche 1 und/oder 2 je nach Anforderungsgrad des Bedieners und durch ein Verfahren nach Anspruch 7 gelöst.

Hierdurch wird für die Voraussetzung geschaffen, wesentliche Fehlstellen oder Mehrfachüberlappungen bei der Materialausbringung, wie Saatgut und/oder Dünger auf dem Feld zu vermeiden.

Hierzu werden die Verzögerungszeiten der Materialförderung vom Dosierorgan zu dem Ausbringorgan ermittelt. Sind diese ausreichend genau bekannt, dies kann beispielsweise durch eine Vorabschätzung und/oder Vorabmessung und/oder - Kalibrierung und/oder durch eine Online-Messung erfolgen. Dann wird oder kann dem Anwender diese Verzögerungszeit auf einer beispielsweise als Display ausgebildeten Anzeigevorrichtung grafisch dargestellt werden. Mit dem Ziel, dass der Anwender mit konstanter Geschwindigkeit ins Feld oder ins Vorgewende fährt und ein "Gefühl" für die Schaltpunkte bekommt. Das Ein- und ausschalten kann aber auch an den ermittelten optimierten Schaltpunkten GPS gesteuert in automatisierter weise von dem Steuersystem und/oder der beispielsweise als Bordrechner ausgebildeten Datenverarbeitungseinrichtung erfolgen.

Auch ohne Sensoren und automatische Messung funktioniert das Anzeige- und/oder Steuersystem für das An- und/oder Abschalten zumindest eines Dosierorgans. Die beispielsweise als Durchflusssensoren ausgebildeten Sensoren müssen nicht notwendigerweise in dem beispielsweise als Schar ausgebildeten Ausbringorgan angeordnet sein, sondern könne auch einer anderen geeigneten Stelle des Fördersystems, beispielsweise dem Verteilerkopf angeordnet sein. Das System ist bei entsprechender Auslegung auch funktionsfähig, wenn die Sensoren im Verteilerkopf sitzen.

Damit der Bediener an den richtigen Stellen zur Vermeidung von wesentlichen Fehlstellen oder Mehrfachüberlappungen bei der Materialausbringung, wie Saatgut und/oder Dünger das Dosierorgan oder die Dosierorgane ein- und/oder ausschalten kann, ist vorgesehen, dass der optimale Ein- und Ausschaltpunkt für das Dosierorgan auf einer Anzeigevorrichtung anzeigbar ist.

Eine Automatisierung der Ein- und/oder Ausschaltvorgänge lässt sich dadurch erreichen, dass die Datenverarbeitungseinrichtung bei Erreichen der optimale Ein- und Ausschaltpunktes für das Dosierorgan dieses entsprechend ein- oder ausschaltet.

Die richtigen, optimalen und/oder optimierten Ein- und Ausschaltpunkte lassen dadurch ermitteln bzw. festlegen, dass die Ermittlung die Förderzeit und/oder die zurückgelegte Wegstrecke der Verteilmaschine des auszubringenden Materiales von der Dosierung des Materiales durch das Dosierorgan bis zur Auslassöffnung der Leitung im Bereich des Ausbringorganes in einem separaten Kalibriervorgang oder während des Beginnes und/oder dem Ende des Durchganges eines Ausbringvorganges vorzugsweise aufgrund der Messdaten eines im Bereich des Ausbringorganes angeordneten Sensors ermittelt wird.

Um den Bediener die optimierten Ein- und Ausschaltpunkt anzeigen zu können, ist vorgesehen, dass auf einer Anzeigevorrichtung die optimalen Ein- und Ausschaltpunkte für das Dosierorgan in Bezug auf die Feld- und/oder Vorgewendegrenzen und/oder -linien und vorzugsweise auch die bereits abgearbeiteten Feldbereiche anzeigt werden.

Die visuelle Anzeige lässt sich beispielsweise als sogenannter GPS-Balken auf einem Display darstellen.

Eine leicht überschaubare und verständliche Anzeige lässt sich dadurch erreichen, dass auf einer Anzeigevorrichtung die optimalen Ein- und Ausschaltpunkte für das Dosierorgan in Bezug auf die Feld- und/oder Vorgewendegrenzen und/oder -linien unter Berücksichtigung und/oder Einberechnung Förderzeit und/oder die zurückgelegte Wegstrecke der Verteilmaschine beim Ausbringen des auszubringenden Materiales von der Dosierung des Materiales durch das Dosierorgan bis zur Auslassöffnung der Leitung im Bereich des Ausbringorganes als virtuelle Linie und/oder Darstellung des Ausbringorganes anzeigt wird.

Weiterhin ist ein Verfahren für ein Anzeige- und/oder Steuersystem nach zumindest einem der Ansprüche 1 bis 7 vorgesehen, bei dem die Förderzeit im Fördersystem ermittelt wird.

In einer Ausführungsform ist vorgesehen, dass die Verteilmaschine als pneumatische Verteilmaschine mit einem Förderluftstrom in den Leitungen ausgebildet ist.

Eine pneumatische, vorzugsweise als Sämaschine ausgebildete Verteilmaschine ist in einer Ausführungsform wie folgt ausgestattet:
- zumindest ein elektrisch angetriebenes Dosierorgan
- elektronische Durchflusssensoren, insbesondere aus der Saatleitungsüberwachung)
- als elektronischer Steuerrechner und Bedieneinheit ausgebildete Datenverarbeitungseinrichtung
- GPS-Steuerung
- geeignete Vorrichtungen zur Kalibrierung von Schaltzeitpunkten am Vorgewende für die vorzugsweise automatische, GPS-gestützte Ein- und Ausschaltung der Dosierorgane
- geeignete Vorrichtungen zur Ermittlung der Dauer zwischen Einschalten des Dosierorgans und Detektion der ersten Körner von den als vorzugsweise Durchflusssensoren ausgebildeten Sensoren oder durch Abschätzung oder durch "Handmessung"
- anschließend geeignete Auswertung durch als Steuerrechner ausgebildete Datenverarbeitungseinrichtung.

Außerdem können Zusatzinformationen notwendig sein, die z.B. Art des Saatguts, Aussaatmenge berücksichtigen. Diese können in Tabellen, dem Terminal/Steuergerät oder einem extra Rechner (Smartphone, Tablet,...) oder im Internet abgelegt sein.

Eine weitere pneumatische, vorzugsweise als Sämaschine ausgebildete Verteilmaschine ist in einer weiteren Ausführungsform wie folgt ausgestattet:
- zumindest ein elektrisch angetriebenes Dosierorgan
- elektronische Durchflusssensoren, insbesondere aus der Saatleitungsüberwachung
- als elektronischer Steuerrechner und Bedieneinheit ausgebildete Datenverarbeitungseinrichtung
- GPS-Steuerung
- geeignete Vorrichtungen zur Ermittlung und/oder Kalibrierung der Förderzeit und/oder von Schaltzeitpunkten am Vorgewende für die vorzugsweise automatische, GPS-gestützte Ein- und Ausschaltung der Dosierorgane.

Hierbei können sowohl Ein- als auch Ausschaltzeiten, welche als Schaltzeitpunkte am Vorgewende, bereits besäte Flächen, Feldgrenzen oder aus welchem Grund auch immer nicht zu besäende Flächen für die automatische, GPS-gestützte Ein- und Ausschaltung benötigt werden, ermittelt werden.

Weiterhin ist vorgesehen:
- geeignete Mittel zur Ermittlung der Dauer zwischen Einschalten des elektrischen Dosierorgans und Detektion der ersten Körner und somit Erkennung des konstanten Saatflusses am beispielsweise als Schar ausgebildeten Ausbringorganes.
- geeignete Mittel zur Ermittlung der Dauer zwischen Ausschalten des elektrischen Dosierorgans und Detektion der letzten Körner und somit den konstanten Saatfluss am beispielsweise als Schar ausgebildeten Ausbringorgan.
- geeignete Mittel zur Auswertung der ermittelten Messdaten durch die als Steuerrechner und Bedieneinheit ausgebildete Datenverarbeitungseinrichtung. Dieser Vorgang kann sowohl während der Feldarbeit als auch in einem gesonderten "Kalibriervorgang" möglich sein.

Damit der Bediener eine Visuelle Kontrolle der Förderzeiten und die damit verbundene "Fahrstrecke" erkennen kann, soll ein sogenannter "Virtueller Säbalken" (auch allgemein für Ausbringorgan und/oder Ausbringeinrichtung) eingeführt werden. Dieser soll abhängig von der Förderzeit, der aktuellen Arbeitsgeschwindigkeit und Fahrtrichtung (erkannt über GPS) den Punkt vor dem "echten" Säbalken auf den Anzeigegerät darstellen, an dem kein Material, wie Saatgut und/oder Dünger mehr ausgebracht wird, wenn das Dosierorgan jetzt stoppen würde. Im Umkehrschluss gilt das gleiche fürs Einschalten. Das Ein- und Ausschalten soll auch automatisch GPS-gestützt funktionieren.

Es wird ein "virtueller Säbalken", der die Verzögerungszeit (der Materialförderung) der Verteilmaschine grafisch anzeigt vorgeschlagen. Die Entfernung und Richtung des "virtuellen Säbalkens" ist abhängig von der Fahrgeschwindigkeit, der Verzögerungszeit und dem Winkel zwischen dem Säbalken und dem Schlepper. So wird eine Verbesserung der Ablege- und/oder Ausbringgenauigkeit unter Verwendung des GPS-Systems erreicht. Somit wird dem Bediener der physikalische Zusammenhang in leicht verständlicher Weise grafisch dargestellt und er kann beim Ausbringen des materiales, beispielsweise beim Säen die Werte besser und einfacher überprüfen.

Weitere Einzelheiten der Erfindung sind der Beispielsbeschreibung zu entnehmen. Die Zeichnungen zeigen
- Fig.1: Prinzipdarstellung der Förderstrecke bei einer als Sämaschine ausgebildeten Verteilmaschine vom Dosierorgan durch die als Rohre und/oder Schläuche ausgebildeten Leitungen bis zum als Schar ausgebildeten Ausbringorgan,
- Fig.2: prinzipielle Darstellung von "Vorschauzeiten" bei verschiedenen Arbeitsgeschwindigkeiten,
- Fig.3: Darstellung des "virtuellen als Säbalken ausgebildeten, Ausbringorgane aufweisenden Ausbringvorrichtung auf dem als Display ausgebildeten Anzeigevorrichtung,
- Fig.4: weitere Darstellung des "virtuellen als Säbalken ausgebildeten, Ausbringorgane aufweisenden Ausbringvorrichtung auf dem als Display ausgebildeten Anzeigevorrichtung,
- Fig.5: weitere Darstellung des "virtuellen als Säbalken ausgebildeten, Ausbringorgane aufweisenden Ausbringvorrichtung auf dem als Display ausgebildeten Anzeigevorrichtung und
- Fig.6: weitere Darstellung des "virtuellen als Säbalken ausgebildeten, Ausbringorgane aufweisenden Ausbringvorrichtung auf dem als Display ausgebildeten Anzeigevorrichtung.

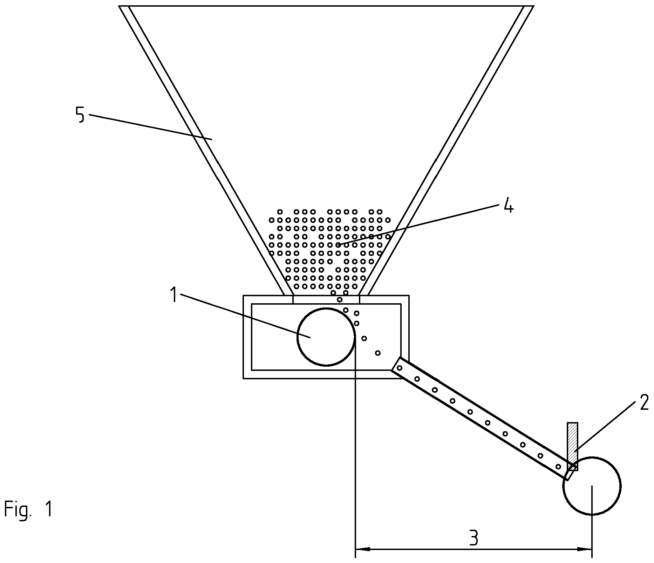

In der Fig. 1 ist u.a. der prinzipielle Aufbau einer als Sämaschine ausgebildeten Verteilmaschine dargestellt, hier geschieht die Ermittlung der relevanten Messwerte im Wesentlichen, wie folgt:
Messvorgang für "Förderzeit Einschalten": Die Zeitmessung startet sobald der Dosiermotor 1 vom Rechner Angesteuert wird und endet sobald die ersten Körner am Sensor 2 erkannt werden.

Messvorgang für "Förderzeit Ausschalten": Die Zeitmessung beginnt sobald der Motor 1 nicht mehr vom Rechner angesteuert wird und endet wenn die letzten Körner am Schar vom Sensor 2 erkannt werden.

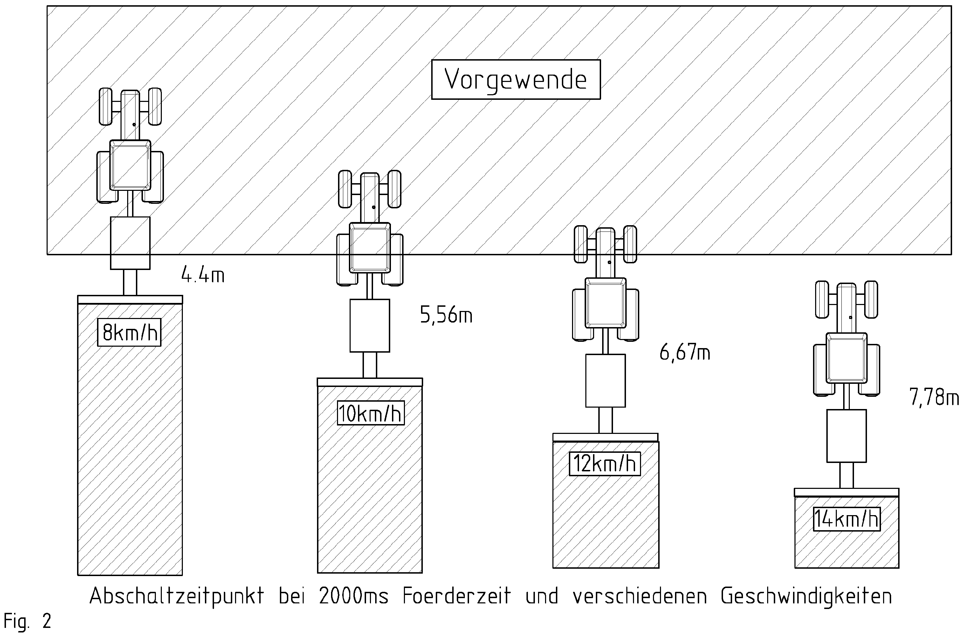

In der Fig.2 sind verschiedene "Vorschauzeiten" bei verschiedenen Arbeitsgeschwindigkeiten dargestellt. Da die Vorschauzeiten nur dann vom Rechner exakt berechnet werden können, wenn konstant und geradlinig auf den Schaltpunkt zugefahren wird, wirkt sich ein großes Vorgewende positiv aus.

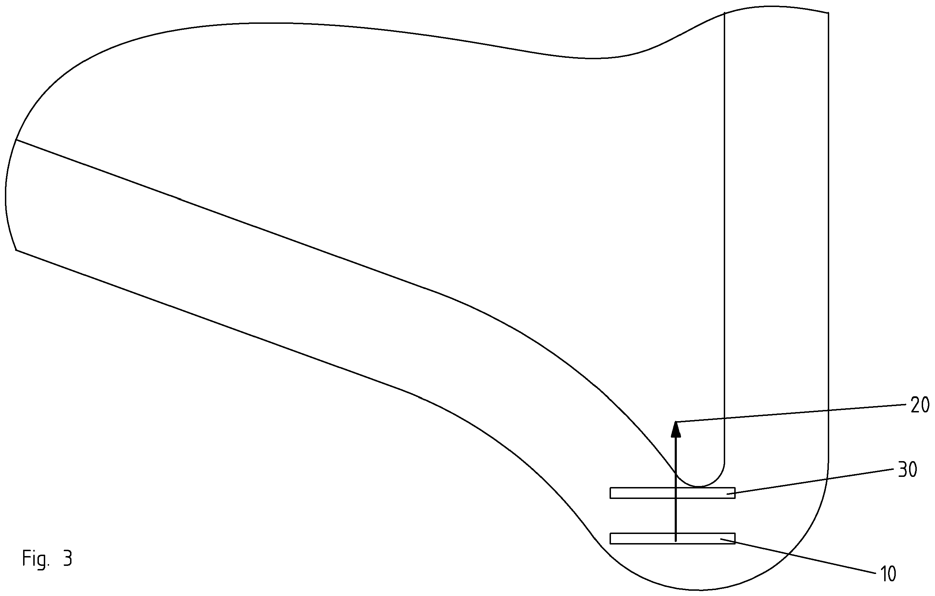

Auf der Darstellung des "virtuellen als Säbalken ausgebildeten, Ausbringorgane aufweisenden Ausbringvorrichtung auf dem als Display ausgebildeten Anzeigevorrichtung gemäß Fig. 3 sieht man den Säbalken 10 und der Pfeil 20 stellt den Schlepper dar. Der hellere Balken 30 ist eine Projektion des Säbalkens 10. Die Entfernung und Richtung des hellen Balkens 30 zeigt den errechneten Abgabepunkt auf dem Feld an. In der Abbildung ist beispielhaft eine Verzögerungszeit von 2000ms bei niedriger Fahrgeschwindigkeit dargestellt. Beide Säbalken 10 und 20 sind in einer Flucht, wenn geradeaus gefahren wird.

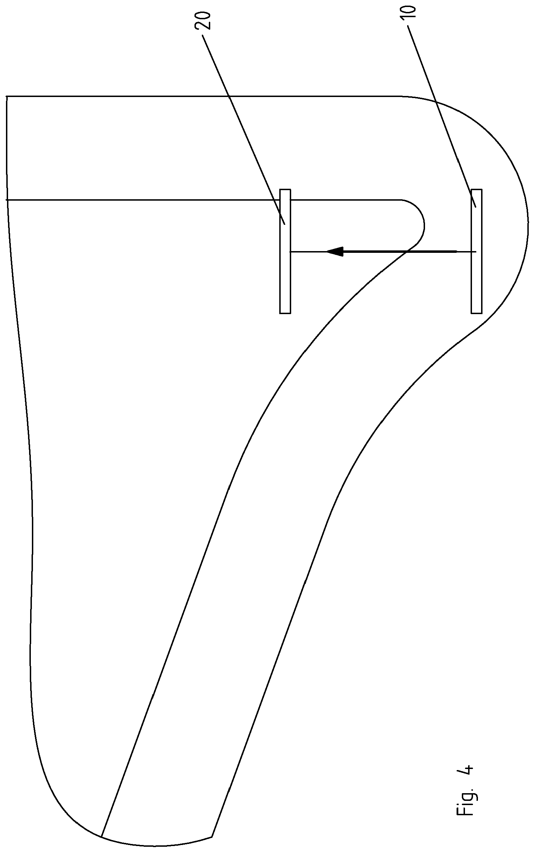

In der Fig.4 ist beispielhaft eine Verzögerungszeit von 2000ms bei höherer Fahrgeschwindigkeit dargestellt. Wird mit der aktuellen Geschwindigkeit weiter gefahren und das Dosierorgan jetzt eingeschaltet, so liegt das erste Saatgut an der jetzigen Position des hellen Säbalkens 20. Die Entfernung zwischen den beiden Säbalken 10 und 20 zeigt die nicht besäte Strecke an.

Die Entfernung zwischen beiden Säbalken 10 und 20 ist abhängig von der Verzögerungszeit, die der Förderzeit des materiales, hier Saatgut vom Dosierorgan bis zum Ausbringorgan, hier Säschar und der Fahrgeschwindigkeit. Die Richtung des hellen Säbalkens 20 ist Abhängig von der Lenkbewegung des Schleppers. Die Entfernung und Richtung beider Säbalken 10 und 20 wird permanent neu berechnet und zur Anzeige gebracht. Die Anzeige unterstützt das richtige Fahrverhalten ins bzw. aus dem Vorgewende.

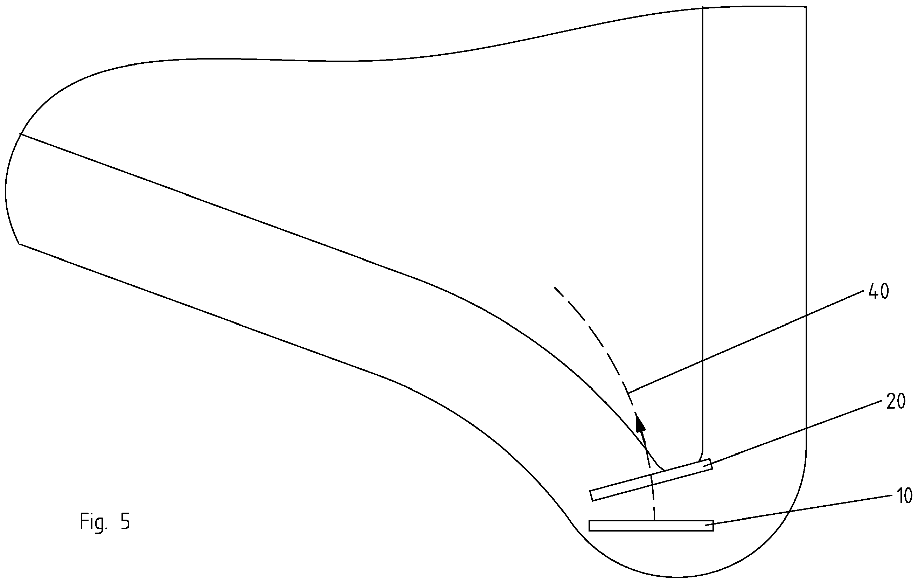

In der Fig.5 ist eine schräge Ausfahrt aus dem Vorgewende bei niedriger Geschwindigkeit gezeigt. Dabei wird eine Kurve 40 erzeugt, die zwischen dem Säbalken 10, 20 und dem Schlepper verläuft.

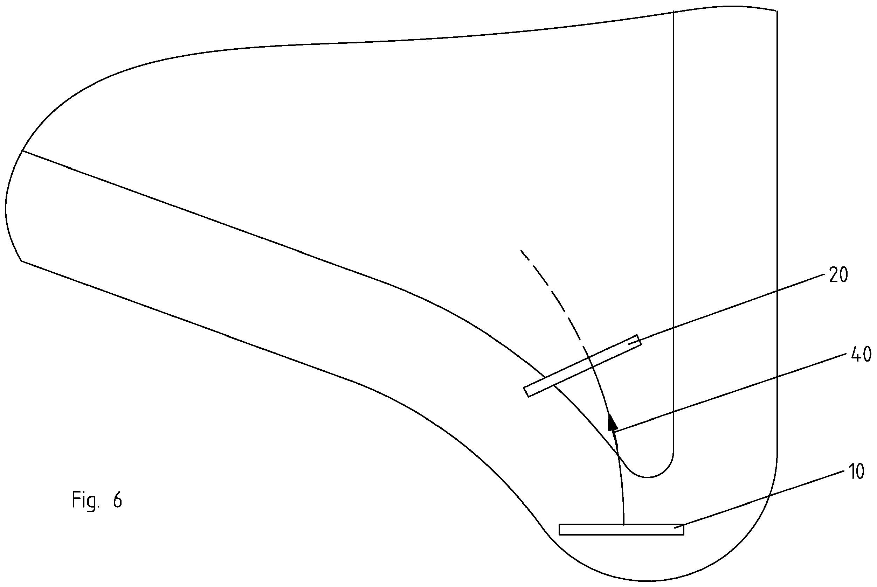

Die Fig.6 zeigt die schräge Ausfahrt bei höherer Geschwindigkeit. Wird zwischen dem Einschalten des Dosiersystems und dem Erreichen des helleren Säbalken 20 Beschleunigt, so ändert sich die Farbe der Linien zwischen den beiden Säbalken 10 und 20. Der hellere Säbalken 20 kann ebenfalls geschaltete Teilbreiten anzeigen.

Auf folgendes sei in erläuternder Weise hingewiesen:
Aktiven Einfluss auf die Förderzeiten hat:
   - die Gebläsedrehzahl
   - das zu dosierende Medium

Passiven Einfluss hat:
- Förderstrecke / Schlauchverlegung
- Dosiereinheit / Motor

Zu den Darstellungen soll noch folgendes in ergänzender und/oder erläuternder Weise ausgeführt werden:
Beim Ausschalten (ins Vorgewende fahren) wirkt sich das langsame ausdrehen des Motors negativ aus. Positiv hingegen die Möglichkeit lange vorher konstant zu fahren.

Beim Einschalten (ins Feld fahren) wirkt sich das schnelle Einschalten des Motors positiv aus. Jedoch ist es im Vorgewende schwer lange konstant zu fahren.

Der helle Säbalken 20 symbolisiert die errechnete Position an der Saatgut im Boden sein sollte.

Die Entfernung des hellen Säbalkens 20 ist abhängig von der Verzögerungszeit und der aktuellen Geschwindigkeit und soll permanent angepasst werden.

Bei Kurvenfahrt mit gezogenen Maschinen (z.B. im Vorgewende) soll eine Kurve errechnet werden. Die Interpolation soll zwischen Säbalken 10, 20 und Schlepper erfolgen.

Bei sehr langen Verzögerungszeiten kann der Anwender sehen, dass die Entfernung des hellen Säbalkens 20 größer wird und die Fahrgeschwindigkeit entsprechend des Vorgewendes angepasst werden muss.

Dem Anwender wird verdeutlicht, dass möglichst konstant und gerade gefahren werden sollte.

Die als Jobrechner ausgebildete Datenverarbeitungseinrichtung könnte durch piepen signalisieren, dass über GPS Switch geschaltet wurde und ab diesem Zeitpunkt sollte die Geschwindigkeit konstant gehalten werden.
Wenn der Jobrechner keine Informationen über Vorgewendeabstand hat und kann er somit auch keine veränderbare Signalfolge kurz vor dem Vorgewende signalisieren.

## Patentansprüche

1. Anzeige- und/ Steuersystem mit einer Anzeigevorrichtung für das An- und/oder Abschalten zumindest eines Dosierorgans einer Verteilmaschine mit einem Vorratsbehälter, in dessen unteren Bereich zumindest ein das sich im Vorratsbehälter befindliche auszubringende Material in einstellbaren Mengen in zumindest eine zu einem eine Auslassöffnung aufweisenden Ausbringorgan führende Leitung einspeisendes von einem Antriebselement betätigbares Dosierorgan angeordnet ist, wobei in eine Datenverarbeitungseinrichtung die Förderzeit und/oder die zurückgelegte Wegstrecke der Verteilmaschine des auszubringenden Materiales von der Dosierung des Materiales durch das Dosierorgan bis zur Auslassöffnung der Leitung im Bereich des Ausbringorganes mittels geeigneter Mittel eingebbar und/oder dieser mitteilbar ist, wobei die Datenverarbeitungseinrichtung entsprechend der pro Zeiteinheit zurückgelegten Wegstrecke durch die Verteilmaschine den optimalen Ein- und Ausschaltpunkt für das Dosierorgan in Bezug auf die Feld- und/oder Vorgewendegrenzen und/oder -linien entsprechend eines im Speicher der Datenverarbeitungseinrichtung hinterlegten Berechnungsverfahren berechnet und/oder ausgibt, **dadurch gekennzeichnet, dass** auf der Anzeigevorrichtung die optimalen Ein- und Ausschaltpunkte für das Dosierorgan in Bezug auf die Feld- und/oder Vorgewendegrenzen und/oder -linien angezeigt werden.

2. Anzeige- und Steuersystem mit einer Anzeigevorrichtung für das An- und/oder Abschalten zumindest eines Dosierorgans einer Verteilmaschine mit einem Vorratsbehälter, in dessen unteren Bereich zumindest ein das sich im Vorratsbehälter befindliche auszubringende Material in einstellbaren Mengen in zumindest eine zu einem eine Auslassöffnung aufweisenden Ausbringorgan führende Leitung einspeisendes von einem Antriebselement betätigbares Dosierorgan angeordnet ist, wobei dem Antriebselement und zumindest einer in im Bereich dessen Auslassöffnung oder dem zugeordnetem Ausbringorgan jeweils zumindest ein Sensor zugeordnet ist, wobei die Sensoren über Datenübertragungseinrichtungen mit einer der Verteilmaschine zugeordneten Datenverarbeitungseinrichtung verbunden sind, wobei die Datenverarbeitungseinrichtung auf Grundlage der von den Sensoren gelieferten Messdaten die Förderzeit und/oder die zurückgelegte Wegstrecke der Verteilmaschine des auszubringenden Materiales von der Dosierung des Materiales durch das Dosierorgan bis zur Auslassöffnung der Leitung im Bereich des Ausbringorganes ermittelt, wobei die Datenverarbeitungseinrichtung entsprechend der pro Zeiteinheit zurückgelegten Wegstrecke durch die Verteilmaschine den optimalen Ein- und Ausschaltpunkt für das Dosierorgan in Bezug auf die Feld- und/oder Vorgewendegrenzen und/oder -linien entsprechend eines im Speicher der Datenverarbeitungseinrichtung hinterlegten Berechnungsverfahren berechnet und/oder ausgibt, **dadurch gekennzeichnet, dass** auf der Anzeigevorrichtung die optimalen Ein- und Ausschaltpunkte für das Dosierorgan in Bezug auf die Feld- und/oder Vorgewendegrenzen und/oder -linien angezeigt werden.

3. Anzeige- und Steuersystem nach Anspruch 1 und/oder 2, **dadurch gekennzeichnet, dass** die Datenverarbeitungseinrichtung bei Erreichen der optimale Ein- und Ausschaltpunktes für das Dosierorgan dieses entsprechend ein- oder ausschaltet.

4. Anzeige- und Steuersystem nach zumindest einem der vorstehenden Ansprüche, **dadurch gekennzeichnet, dass** die Ermittlung die Förderzeit und/oder die zurückgelegte Wegstrecke der Verteilmaschine des auszubringenden Materiales von der Dosierung des Materiales durch das Dosierorgan bis zur Auslassöffnung der Leitung im Bereich des Ausbringorganes in einem separaten Kalibriervorgang oder während des Beginnes und/oder dem Ende des Durchganges eines Ausbringvorganges vorzugsweise aufgrund der Messdaten eines im Bereich des Ausbringorganes angeordneten Sensors ermittelt wird.

5. Anzeige- und Steuersystem nach zumindest einem der vorstehenden Ansprüche, **dadurch gekennzeichnet, dass** auf einer Anzeigevorrichtung die optimalen Ein- und Ausschaltpunkte für das Dosierorgan in Bezug auf die Feld- und/oder Vorgewendegrenzen und/oder -linien auch die bereits abgearbeiteten Feldbereiche anzeigt werden.

6. Anzeige- und Steuersystem nach zumindest einem der vorstehenden Ansprüche, **dadurch gekennzeichnet, dass** auf einer Anzeigevorrichtung die optimalen Ein- und Ausschaltpunkte für das Dosierorgan in Bezug auf die Feld- und/oder Vorgewendegrenzen und/oder -linien unter Berücksichtigung und/oder Einberechnung Förderzeit und/oder die zurückgelegte Wegstrecke der Verteilmaschine beim Ausbringen des auszubringenden Materiales von der Dosierung des Materiales durch das Dosierorgan bis zur Auslassöffnung der Leitung im Bereich des Ausbringorganes als virtuelle Linie und/oder Darstellung des Ausbringorganes anzeigt wird.

7. Verfahren zum Berechnen oder Ausgleichen vom optimalen Ein- und Ausschaltpunkt für das Dosierorgan eines Anzeige- und/oder Steuersystems nach zumindest einem der Ansprüche 1 bis 6, wobei die Förderzeit im Fördersystem ermittelt wird.

8. Verfahren und System nach Anspruch 7, **dadurch gekennzeichnet, dass** die Verteilmaschine als pneumatische Verteilmaschine mit einem Förderluftstrom in den Leitungen ausgebildet ist.

## Claims

1. Display and control system having a display device for the connection and/or disconnection of at least one metering element of a distribution machine having a storage container, in the lower region of which there is arranged at least one metering element which can be operated by a drive element and feeds the material that is located in the storage container and is to be discharged in adjustable quantities into at least one line leading to a discharge element having an outlet opening, where the delivery time and/or the distance covered by the distribution machine of the material to be discharged from the metering of the material by the metering element as far as the outlet opening of the line in the region of the discharge element can be entered into a data processing device and/or communicated thereto by suitable means, where, in accordance with the distance covered per unit time by the distribution machine, the data processing device calculates and/or outputs the optimum connection and disconnection point for the metering element in relation to the field and/or headland limits and/or lines in accordance with a calculation method stored in the memory of the data processing device,
**characterized in that** the optimum connection and disconnection points for the metering element in relation to the field and/or headland limits and/or lines are displayed on the display device.

2. Display and control system having a display device for the connection and/or disconnection of at least one metering element of a distribution machine having a storage container, in the lower region of which there is arranged at least one metering element which can be operated by a drive element and feeds the material that is located in the storage container and is to be discharged in adjustable quantities into at least one line leading to a discharge element having an outlet opening, where the drive element and at least one in in the region of its outlet opening or the assigned discharge element is respectively assigned at least one sensor, where the sensors are connected via data transmission devices to a data processing device assigned to the distribution machine, where, on the basis of the measured data supplied by the sensors, the data processing device determines the delivery time and/or the distance covered by the distribution machine of the material to be discharged from the metering of the material by the metering element as far as the outlet opening of the line in the region of the discharge element, where, in accordance with the distance covered per unit time by the distribution machine, the data processing device calculates and/or outputs the optimum connection and disconnection point for the metering element in relation to the field and/or headland limits and/or lines in accordance with a calculation method stored in the memory of the data processing device,
**characterized in that** the optimum connection and disconnection points for the metering element in relation to the field and/or headland limits and/or lines are displayed on the display device.

3. Display and control system according to Claim 1 and/or 2, **characterized in that** when the optimal connection and disconnection point for the metering element is reached, the data processing device connects or disconnects the latter accordingly.

4. Display and control system according to at least one of the preceding claims, **characterized in that** the delivery time and/or the distance covered by the distribution machine of the material to be discharged from the metering of the material by the metering element as far as the outlet opening of the line in the region of the discharge element is determined in a separate calibration process or during the start and/or the end of the passage through a discharge process, preferably on the basis of the measured data from a sensor arranged in the region of the discharge element.

5. Display and control system according to at least one of the preceding claims, **characterized in that** the optimum connection and disconnection points for the metering element in relation to the field and/or headland limits and/or lines and also the field areas already processed are displayed on a display device.

6. Display and control system according to at least one of the preceding claims, **characterized in that** the optimum connection and disconnection points for the metering element in relation to the field and/or headland limits and/or lines are displayed on a display device, taking into account and/or incorporating delivery time and/or the distance covered by the distribution machine when discharging the material to be discharged from the metering of the material by the metering element as far as the outlet opening of the line in the region of the discharge element, as a virtual line and/or representation of the discharge element.

7. Method for calculating or equalizing the optimum connection and disconnection point for the metering element of a display and/or control system according to at least one of Claims 1 to 6, wherein the delivery time is determined in the delivery system.

8. Method and system according to Claim 7, **characterized in that** the distribution machine is constructed as a pneumatic distribution machine with a delivery air stream in the lines.

## Revendications

1. Système d'affichage et/ou de commande comportant un dispositif d'affichage destiné à l'activation et/ou à la désactivation d'au moins un organe de dosage d'une machine de distribution munie d'un réservoir, dans la zone inférieure duquel est disposé au moins un organe de dosage pouvant être actionné par un élément d'entraînement, qui introduit le matériau à épandre se trouvant dans le réservoir en quantités réglables dans au moins une conduite conduisant à un organe d'épandage comportant une ouverture de sortie, dans lequel le temps de pompage et/ou la distance parcourue dans un dispositif de traitement de données de la machine de distribution du matériau à épandre, depuis le dosage du matériau par l'organe de dosage jusqu'à l'ouverture de sortie de la conduite, dans la région de l'organe d'épandage, par des moyens appropriés, peut être fourni en entrée et/ou lui être communiqué, dans lequel le dispositif de traitement de données calcule et/ou fournit en sortie, d'une manière qui correspond à la distance parcourue par unité de temps par la machine de distribution, le point d'activation et de désactivation de l'organe de dosage par rapport aux limites et/ou aux lignes de champs et/ou de bords de champs, d'une manière qui correspond à un procédé de calcul stocké dans la mémoire du dispositif de traitement de données, **caractérisé en ce que** les points d'activation et de désactivation optimaux pour l'organe de dosage par rapport aux limites et/ou aux lignes de champs et/ou de bords de champs sont affichés sur le dispositif d'affichage.

2. Système d'affichage et/ou de commande comportant un dispositif d'affichage destiné à l'activation et/ou à la désactivation d'au moins un organe de dosage d'une machine de distribution munie d'un réservoir dans la zone inférieure duquel est disposé au moins un organe de dosage pouvant être actionné par un élément d'entraînement, qui introduit le matériau à épandre se trouvant dans le réservoir en quantités réglables dans au moins une conduite conduisant à un organe d'épandage comportant une ouverture de sortie, dans lequel au moins un capteur est respectivement associé à l'élément d'entraînement et à au moins une dans dans la région de sa ouverture de sortie ou à l'organe d'épandage associé, dans lequel les capteurs sont connectés par l'intermédiaire de dispositifs de transmission de données à un dispositif de traitement de données associé à la machine de distribution, dans lequel le dispositif de traitement de données détermine, sur la base des données de mesure délivrées par les capteurs, le temps de pompage et/ou la distance parcourue par la machine de distribution du matériau à épandre depuis le dosage du matériau par l'organe de dosage jusqu'à l'ouverture de sortie de la conduite dans la région de l'organe d'épandage, dans lequel le dispositif de traitement de données calcule et/ou délivre, d'une manière qui correspond à la distance parcourue par unité de temps par la machine de distribution, le point d'activation et de désactivation optimal pour l'organe de dosage par rapport aux limites et/ou aux lignes de champs et/ou de bords de champs, d'une manière qui correspond à un procédé de calcul stocké dans la mémoire du dispositif de traitement, **caractérisé en ce que** les points d'activation et de désactivation optimaux pour l'organe de dosage sont affichés sur le dispositif d'affichage par rapport aux limites et/ou aux lignes de champs et/ou de bords de champs.

3. Système d'affichage et de commande selon la revendication 1 et/ou 2, **caractérisé en ce que** le dispositif de traitement de données active ou désactive l'organe de dosage lorsque les points d'activation et de désactivation optimaux pour celui-ci sont atteints.

4. Système d'affichage et de commande selon au moins l'une des revendications précédentes, **caractérisé en ce que** le temps de pompage et/ou la distance parcourue par la machine de distribution du matériau à épandre depuis le dosage du matériau par l'organe de dosage jusqu'à l'ouverture de sortie de la conduite, dans la région de l'organe d'épandage, est déterminé lors d'un processus d'étalonnage séparé ou pendant le début et/ou la fin de la traversée d'un organe d'épandage, de préférence sur la base des données de mesure d'un capteur disposé dans la région de l'organe d'épandage.

5. Système d'affichage et de commande selon au moins l'une des revendications précédentes, **caractérisé en ce que** les points d'activation et de désactivation optimaux pour l'organe de dosage par rapport aux limites et/ou aux lignes de champs et/ou de bords de champs ainsi que les zone de champs déjà traitées sont affichés sur le dispositif d'affichage.

6. Système d'affichage et de commande selon au moins l'une des revendications précédentes, **caractérisé en ce que** les points d'activation et de désactivation optimaux pour l'organe de dosage par rapport aux limites et/ou aux lignes de champs et/ou de bords de champs sont affichés sur un dispositif d'affichage prenant en compte et/ou en calculant le temps de pompage et/ou la distance parcourue par la machine de distribution lors de l'épandage du matériau à épandre depuis le point de dosage du matériau par l'organe de dosage jusqu'à l'ouverture de sortie de la conduite, dans la région de l'organe de dosage, sous la forme de courbes virtuelles et/ou d'une représentation de l'organe d'épandage.

7. Procédé de calcul ou de compensation de points d'activation et de désactivation optimaux pour l'organe de dosage d'un système d'affichage et/ou de commande selon au moins l'une des revendications 1 à 6, dans lequel le temps de pompage est déterminé dans le système de transport.

8. Procédé et système selon la revendication 7, **caractérisé en ce que** la machine de distribution est réalisée sous la forme d'une machine de distribution pneumatique utilisant un flux d'air de transport dans les conduites.
